# EUROPEAN PATENT SPECIFICATION

(11) **EP 1 342 641 B1**
(45) Date of publication and mention of the grant of the patent: **18.11.2009**
(21) Application number: 03100447.6
(22) Date of filing: 25.02.2003
(51) Int. Cl.: B62D 1/16

(54) **Steering equipment for vehicles**
Lenkausstattung für eine Fahrzeuglenkung
Equipement pour direction de véhicule

(30) Priority: 04.03.2002 IT BO20020107
(43) Date of publication of application: 10.09.2003
(60) Divisional application: 09163789.2
(73) Proprietor: CNH Italia S.p.A., 41100 Modena (IT)
(72) Inventor: Mazzucchi, Franco, 41050, Ciano nel Frignano (Modena) (IT); Carreri, Andrea, 41037, Mirandola (Modena) (IT); Sedoni, Enrico, , Modena (IT); Sereni, Eugenio, 41100, Modena (IT)
(74) Representative: Vandenbroucke, Alberic

(56) References cited:
- EP-A- 1 142 773
- DE-A- 19 625 966
- DE-A- 19 935 089
- US-A1- 2002 047 255
- PATENT ABSTRACTS OF JAPAN vol. 2000, no. 20, 10 July 2001 (2001-07-10) & JP 2001 076593 A (YAZAKI CORP), 23 March 2001 (2001-03-23)

## Description

The present invention relates to steering equipment for vehicles, and more particularly, although not exclusively, to steering equipment for agricultural vehicles, such as tractors, combine harvesters and forage harvesters.

In an agricultural vehicle it is known to use steering equipment of the type comprising a steering unit, which in turn comprises a steering column having a given longitudinal axis, a transmission shaft mounted inside the steering column for rotating about the aforesaid axis and a steering wheel mounted on the transmission shaft. Additionally, a control device for actuating an operating unit may be provided. The control device may be operable e.g. to induce conversion between "conventional steering mode" and "fast steering mode" as described in EP-A-1.142.773.

The steering unit is designed to control the steering of a pair of wheels of the vehicle by means of interposition of a hydraulic steering valve, which enables the steering wheel to continue to rotate about the aforesaid axis even when the wheels have reached their maximum steering angle. Consequently, a given steering angle of the wheels therefore does not correspond to a given position of the steering wheel about the aforesaid axis.

Known steering equipment of the type described above presents the serious drawback represented by the fact that, in said steering equipment, the control device is normally mounted on the dashboard of the vehicle, and actuation thereof forces the operator, who is normally already occupied in operating other functions such as a gear change, to let go of the steering wheel with both hands and thus to perform a relatively dangerous operation. Moreover, when the control device, in order to remain active, requires an uninterrupted actuation, then the operator is forced to stop operating other functions and to return one hand to the steering wheel for controlling steering.

DE-196 25 966 relates to steering-wheel finger-tip controls for motor vehicle which has controls mounted on a console. The control console is ring-shaped and is mounted behind the steering wheel to be reached by the finger tips. The driver is able to retain grip on the steering wheel with the palm of the hand. The finger tip force on the controls also increases the grip on the steering wheel. The console has a larger diameter than the steering wheel and is in several segments supported on the steering column cowl. The separate controls replace the stalk mounted controls. The switches are operated by pressure under the console i.e. by pulling up against the steering wheel. The position of the console is adjustable to match different sizes of hand. However, a disadvantage of the control console is that the console is always in the vicinity of the steering wheel and can interfere with the normal working operations when the operation of the console is not needed.

The purpose of the present invention is to provide steering equipment for a vehicle which is free from the drawbacks referred to above.

According to the present invention, steering equipment is provided for vehicles, as claimed in Claim 1.

The present invention will now be described further, by way of example, with reference to the accompanying drawings, in which :
Figure 1 is a schematic side view of a preferred embodiment of the steering equipment of the present invention;
Figures 2 and 3 are perspective views of a detail of Figure 1, illustrated in two different operative positions.

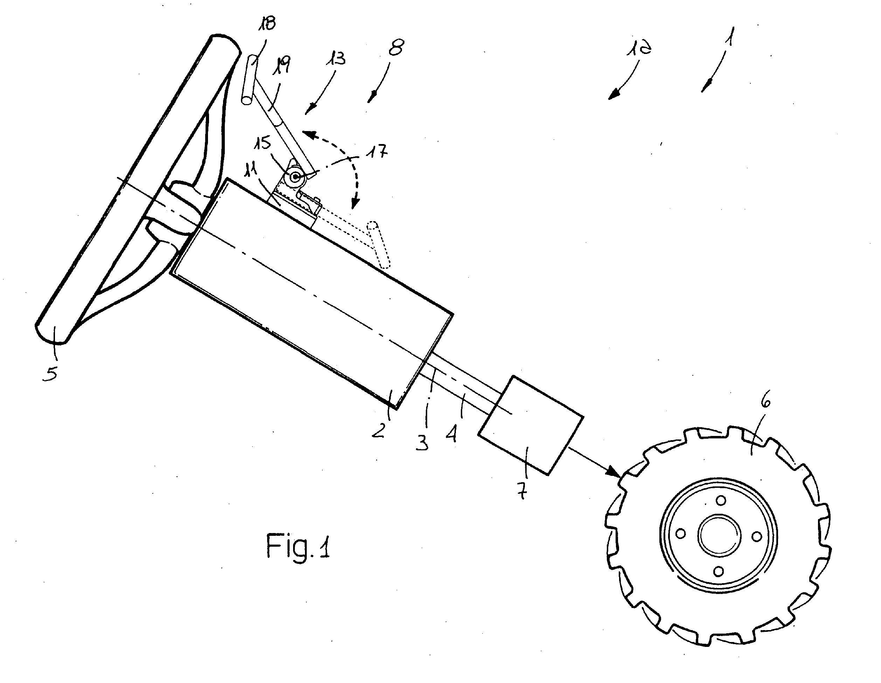

With reference to Figure 1, the reference number 1 designates, as a whole, steering equipment for vehicles, in particular for agricultural vehicles, the said equipment comprising a steering unit 1a, which in turn comprises a tubular steering column 2 extending along an axis 3 and connected in a known way to a chassis (not illustrated) of the vehicle. A tubular transmission shaft 4 is mounted inside the steering column 2 co-axially with respect to the axis 3, and a steering wheel 5 is fitted on one end of the shaft 4 for controlling the steering of a pair of wheels 6 (only one of which is represented in Figure 1) by means of a hydraulic unit 7 of the type described in the patent application No. EP-A-1.142.773, which is integrally incorporated herein by reference.

The steering unit 1a comprises a control device 8 acting upon the hydraulic unit 7 for varying a steering ratio, i.e., the ratio between the angle of rotation of the steering wheel 5 about the axis 3 and the angle of steering of the wheels 6, between a first relatively large value k1, which is characteristic of a first mode of operation, defined as "conventional steering", and a second relatively small value k2, which is characteristic of a second mode of operation, defined as "fast steering".

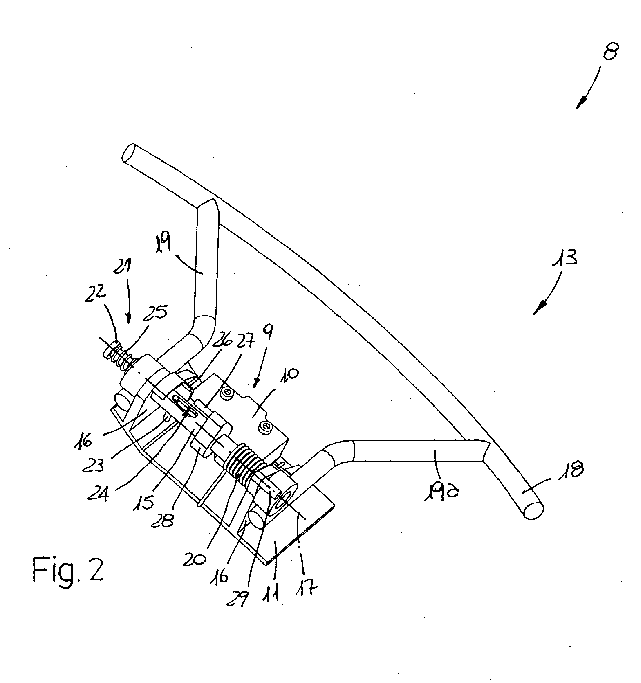

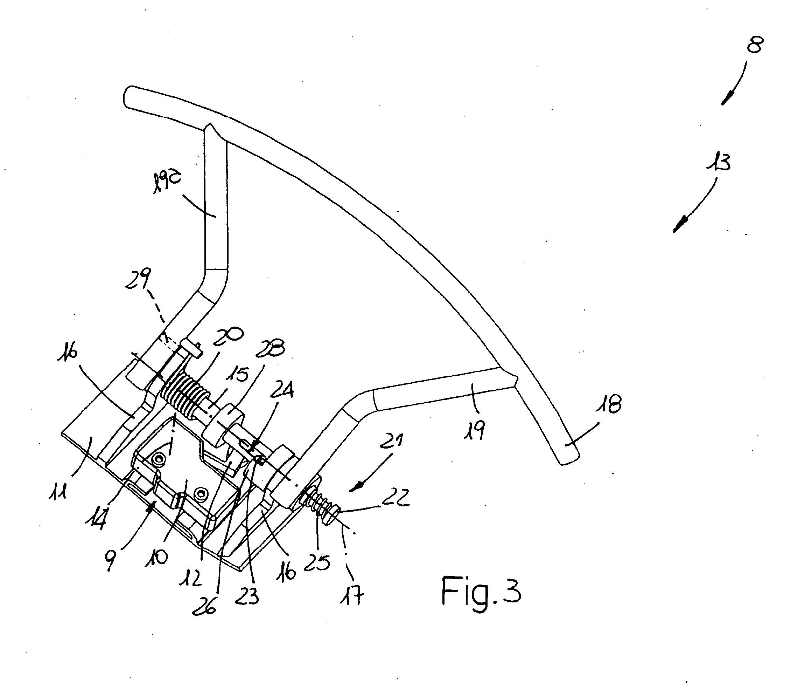

With reference to Figures 2 and 3, the device 8 comprises a switch 9 of a known type, which is connected to an electronic control unit (not illustrated) designed to selectively control operation of the hydraulic unit 7 in response to a signal coming from the switch 9. The switch 9 comprises a fixed part 10 mounted on a substantially plane plate 11 fixed to the steering column 2 and a mobile part defined by an arm 12 (figure 3) hinged to the part 10 so as to oscillate relative thereto under the thrust of an actuator device 13, about a pivot axis 14 substantially perpendicular to the plate 11.

The device 13 comprises a tubular shaft 15 coupled pivotally to two ribs 16 projecting from the plate 11. The shaft 15 is able to oscillate, with respect to the ribs 16, about a longitudinal axis 17 that is substantially orthogonal to the axes 3 and 14. The device 13 further comprises a control member 18, which substantially has the shape of a sector of a circle and is fixed to the shaft 15 by means of two arms 19, 19a fixed to the ends of the shaft 15.

The member 18 is able to pivot about axis 17 under the thrust exerted by an operator and against the thrust of a cylindrical helical spring 20. Spring 20 is fitted on the shaft 15 co-axially with respect to the axis 17 and set between the plate 11 and arm 19a. The member 18 pivots about the axis 17 in a counterclockwise direction, as viewed in Figures 1 and 2, from a resting position (indicated by a dashed line in Figure 1), in which the member 18 is set at a given distance from the steering wheel 5, to an operative position (indicated by a solid line in Figure 1), in which the member 18 is set in a position which is substantially coaxial with respect to the axis 3. The member 18 is placed in the resting position whenever inadvertent actuation of the device 8 should be avoided.

The member 18 is clamped in its resting and operative positions by means of a clamping device 21 comprising a release button 22, which is engaged in such a way that it can turn and slide axially through the shaft 15, and is angularly clamped on the shaft 15 by means of a pin 23, which extends outwards from an outer surface of the button 22 to engage, in a slidable and angularly fixed manner, a slit 24 made radially through the shaft 15.

The device 21 further comprises a cylindrical helical spring 25, which is fitted on the button 22 co-axially with respect to the axis 17. The spring 25 is provided between the shaft 15 and the button 22, and is designed to keep the button 22 in a clamping position (Figures 2 and 3), in which the pin 23 is operable to engage an end-of-travel element 26 both when the member 18 is set in its resting or its operative position. The element 26, which is fixedly attached to one of the ribs 16, basically has the shape of a sector of a circle which is coaxial to the axis 17, and extends from one of the ribs 16 in the direction of the other rib 16.

The arm 12 of the switch 9 is operated by means of a pin 27, which extends parallel to the axis 17 and projects from a central widened portion 28 of the shaft 15. When the member 18 is displaced into its operative position, the pin 27 is brought into touching contact with the arm 12 (Figure 3) however initially without moving the arm 12.

The pin 27 is operable to rotate the arm 12 about the axis 14 into a position for closing the switch 9 upon a further displacement of the member 18 (in a counterclockwise direction, as viewed in Figure 1, and in a clockwise direction, as viewed in Figure 3), against the thrust of the spring 20 and under the thrust exerted by the operator. As such, the member 18 is moved from its operative position into an actuation position (not illustrated) until the arm 19a comes into contact with an end-of-travel element 29 projecting from the corresponding rib 16, parallel to the axis 17.

In use, the displacement of the member 18 from its resting position to its operative position is initiated by pushing the button 22 towards the nearby rib 16 along the axis 17 and into a releasing position, in which the pin 23 disengages from the element 26. Then, the member 18 is rotated about the axis 17 (in a counterclockwise direction, as viewed in Figures 1 and 2) against the thrust of the spring 20. Finally, both the button 22 and the member 18 are released in order to enable the button 22 to set itself once again in its clamping position and, consequently, to enable the pin 23 to engage the other side of element 26.

Further movement of the member 18 from its operative position to its actuation position is performed by displacing the member 18 about the axis 17 (in a counterclockwise direction, as viewed in Figure 1) against the thrust of the spring 20 so as to bring the arm 19a into engagement with the end-of-travel element 29. By this action, pin 27 rotates the arm 12 into the position for closing the switch 9.

According to an alternative embodiment (not illustrated), the member 18 is provided with an encircling sleeve, which is located between the arms 19, 19a and is connected in a slidable way to the member 18.
The sleeve is somewhat shorter than the distance between the two arms 19, 19a and is normally kept in a central position by means of two springs, which are set at the ends of the sleeve between the sleeve and the arms 19, 19a respectively.

In the absence of the above-mentioned sleeve, the simultaneous actuation of the steering wheel 5 and of the member 18 is rendered somewhat inconvenient by the fact that the operator must displace the member 18 with his hand between the operative position and the actuation position and, at the same time, must slide his hand along the member 18 in order to accompany rotation of the steering wheel 5 about the axis 3.

The slidable assembly of the sleeve on the member 18 enables the operator instead to turn the steering wheel 5 about the axis 3 with his hand and, at the same time, to displace the member 18 between its operative position and its actuation position by gripping the sleeve firmly. The presence of the sleeve thus prevents the need for the operator to slide his hand along the member 18. Only small movements of the sleeve are required considering that, once "fast steering" mode is chosen, only little rotation of the steering wheel 5 is needed to quickly turn the wheels 6.

The arrangement of the control device 8 on the steering column 2 thus enables the hydraulic unit 7 to be operated with relative ease and convenience in such a way that the steering ratio will assume the value k1 when the member 18 set itself in its operative position and the value k2 when the member 18 set itself in its position of actuation of the switch 9.

## Claims

1. Steering equipment for a vehicle comprising a steering unit (1a), in turn comprising a steering column (2) having a first given longitudinal axis (3); a transmission shaft (4) mounted inside the steering column (2) for rotating about said first axis (3); a steering wheel (5) mounted on the transmission shaft (4); and a control device (8) for actuating an operating unit; the control device (8) comprises a switch (9) and a control member (18), which basically has the shape of a sector of a circle and is mobile between an operative position, in which the control member (18) is substantially co-axial with said first axis (3), and a position of actuation of the switch (9), the control device (8) further comprises actuator means (20) operable to move the control member (18) from the actuation position to the operative position **characterised in that** the control device (8) further comprises a shaft (15) fixed to said control member (18) and mounted such that it can turn about a second longitudinal axis (17); the shaft (15) having an actuator member (27), operable to actuate said switch (9) upon a displacement of the control member (18) from the operative position to the actuation position.

2. The equipment according to claim 1, **characterized in that** said actuator means (20) comprise at least one spring (20) designed to maintain the control member (18) normally in said operative position.

3. The equipment according to claim 1 or 2,
**characterized in that** the control device (8) further comprises a clamping device (21) for clamping the control member (18) in said operative position.

4. The equipment according to claim 3, **characterized in that** the clamping device (21) comprises a pin (23) set transverse to said second axis (17) and coupled in an angularly fixed way to said shaft (15) so as to rotate about the second axis (17), and end-of-travel means (26) operable to arrest the pin (23) when the control member (18) is set in the operative position.

5. The equipment according to claim 4, **characterized in that** said actuator means (20) are further operable to move the control member (18) from said operative position to a resting position; the control member (18) being positioned, when in the inoperative position, at a first distance from the steering wheel (5) and, when in the resting position, at a second distance from the steering wheel (5) greater than the first distance.

6. The equipment according to claim 5, **characterized in that** said shaft (15) is tubular and has a slit (24) made radially through the shaft (15).

7. The equipment according to claim 6, **characterized in that** the clamping device (21) is operable to arrest the control member (18) in said operative position and in said resting position and further comprises a release button (22) coaxial with respect to said second axis (17) and engaged in a slidable and angularly fixed way through said shaft (15); the pin (23) being fixed to the button (22) and slidably engaging the slit (24) so as to be moved, under the thrust of the button (22) away from and towards a releasing position, in which the pin (23) disengages from said end-of-travel means (26).

8. The equipment according to claim 7, **characterized in that** the clamping device (21) further comprises at least one second spring (25) acting on said button (22) for moving and maintaining the pin (23) in a clamped position, in which the pin (23) is operable to engage said end-of-travel means (26).

9. The equipment according to any one of the preceding claims, **characterized in that** the control device (8) comprises further end-of-travel means (29) for arresting the control member (18) in said actuation position.

10. The equipment according to any one of the preceding claims, **characterized in that** said control device (8) further comprises an electronic control unit operable to control operation of said operating unit according to a signal coming from said switch (9).

## Patentansprüche

1. Lenkausrüstung für ein Fahrzeug mit einer Lenkeinheit (1a), die ihrerseits eine Lenksäule (2) mit einer ersten vorgegebenen Längsachse (3) umfasst; mit einer Übertragungswelle (4), die im Inneren der Lenksäule (2) für eine Drehung um die erste Achse (3) befestigt ist; mit einem Lenkrad (50), das auf der Übertragungswelle (4) befestigt ist; und mit einer Steuereinrichtung (8) zum Betätigen einer Betriebseinheit; wobei die Steuereinrichtung (8) einen Schalter (9) und ein Steuerelement (18) umfasst, das grundlegend die Form eines Kreissektors hat und zwischen einer Betriebsstellung, in der das Steuerelement (18) im Wesentlichen koaxial zu der ersten Achse (3) ist, und einer Betätigungsstellung des Schalters (9) beweglich ist, wobei die Steuereinrichtung (8) weiterhin Betätigungseinrichtungen (20) umfasst, die betätigbar sind, um das Steuerelement (18) von der Betätigungsstellung auf die Betriebsstellung zu bewegen, **dadurch gekennzeichnet, dass** die Steuereinrichtung (8) weiterhin eine an dem Steuerelement (18) befestigte Welle (15) umfasst, die derart befestigt ist, dass sie sich um eine zweite Längsachse (17) drehen kann; wobei die Welle (15) ein Betätigungselement (27) aufweist, das zur Betätigung des Schalters (9) bei einer Bewegung des Steuerelementes (18) von der Betriebsstellung in die Betätigungsstellung betreibbar ist.

2. Ausrüstung nach Anspruch 1, **dadurch gekennzeichnet, dass** die Betätigungseinrichtungen (20) zumindest eine Feder (20) umfassen, die zum Halten des Steuerelementes (18) normalerweise in der Betriebsstellung ausgelegt ist.

3. Ausrüstung nach Anspruch 1 oder 2, **dadurch gekennzeichnet, dass** die Steuereinrichtung (8) weiterhin eine Klemmeinrichtung (21) zum Klemmen des Steuerelementes (18) in der Betriebsstellung umfasst.

4. Ausrüstung nach Anspruch 3, **dadurch gekennzeichnet, dass** die Klemmeinrichtung (21) einen Stift (23), der quer zu der zweiten Achse (17) eingesetzt ist und in einer winkelmäßig festen Weise mit der Welle (15) gekoppelt ist, um sich um die zweite Achse (17) zu drehen, und eine Bewegungsende-Einrichtung (26) umfasst, die zum Stoppen des Stiftes (23) betreibbar ist, wenn das Steuerelement (18) auf die Betriebsstellung eingestellt ist.

5. Ausrüstung nach Anspruch 4, **dadurch gekennzeichnet, dass** die Betätigungseinrichtungen (20) weiterhin betreibbar sind, um das Steuerelement (18) von der Betriebsstellung auf eine Ruhestellung zu bewegen; wobei das Steuerelement (18), wenn es sich in der Ruhestellung befindet, an einer ersten Entfernung von dem Lenkrad (5) angeordnet ist, während es sich in der Ruhestellung an einer zweiten Entfernung von dem Lenkrad (5) befindet, die größer als die erste Entfernung ist.

6. Ausrüstung nach Anspruch 5, **dadurch gekennzeichnet, dass** die Welle (15) rohrförmig ist und einen Schlitz (24) aufweist, der radial durch die Welle (15) hindurch ausgebildet ist.

7. Ausrüstung nach Anspruch 6, **dadurch gekennzeichnet, dass** die Klemmeinrichtung (21) zum Festhalten des Steuerelementes (18) in der Betriebsstellung und in der Ruhestellung betreibbar ist und weiterhin einen Auslöseknopf (22) umfasst, der koaxial bezüglich der zweiten Achse (17) angeordnet ist und in einer verschiebbaren und winkelmäßig festgelegten Weise durch die Welle (15) hindurch in Eingriff steht; wobei der Stift (23) an dem Knopf (22) befestigt ist und gleitend mit dem Schlitz (24) in Eingriff steht, so dass er unter der Schubkraft des Knopfes (22) von einer Freigabeposition fort und in Richtung auf diese beweglich ist, in der der Stift (23) außer Eingriff mit der Bewegungsende-Einrichtung (26) kommt.

8. Ausrüstung nach Anspruch 7, **dadurch gekennzeichnet, dass** die Klemmeinrichtung (21) weiterhin zumindest eine zweite Feder (25) umfasst, die auf den Knopf (22) wirkt, um den Stift (23) in eine geklemmte Position zu bewegen und in dieser zu halten, in der der Stift (23) betreibbar ist, um mit der Bewegungsende-Einrichtung (26) in Eingriff zu kommen.

9. Ausrüstung nach einem der vorhergehenden Ansprüche, **dadurch gekennzeichnet, dass** die Steuereinrichtung (8) weitere Bewegungsende-Einrichtungen (29) zum Festlegen des Steuerelementes (18) in der Betätigungsposition umfasst.

10. Ausrüstung nach einem der vorhergehenden Ansprüche, **dadurch gekennzeichnet, dass** die Steuereinrichtung (8) weiterhin eine elektronische Steuereinheit umfasst, die zur Steuerung des Betriebs der Betriebseinheit gemäß einem Signal betreibbar ist, das von dem Schalter (9) kommt.

## Revendications

1. Equipement de direction pour un véhicule comprenant un ensemble de direction (1a), comprenant à son tour une colonne de direction (2) ayant un premier axe longitudinal donné (3), un arbre de transmission (4) monté à l'intérieur de la colonne de direction (2) à rotation autour du dit premier axe (3), un volant de direction (5) monté sur l'arbre de transmission (4), et un dispositif de commande (8) pour actionner une unité d'exécution, le dispositif de commande (8) comprenant un commutateur (9) et un organe de commande (18), qui en substance a la forme d'un secteur d'un cercle et est mobile entre une position fonctionnelle, dans laquelle l'organe de commande (18) est sensiblement co-axial avec ledit premier axe (3), et une position d'actionnement du commutateur (9), le dispositif de commande (8) comprenant en plus un dispositif actionneur (20) opérationnel pour déplacer l'organe de commande (18) de la position d'actionnement vers la position fonctionnelle, **caractérisé en ce que** le dispositif de commande (8) comprend en plus un arbre (15) fixé au dit organe de commande (18) et monté de telle sorte qu'il peut tourner autour d'un second axe longitudinal (17), l'arbre (15) ayant un organe actionneur (27), opérationnel pour actionner ledit commutateur (9) sur un déplacement de l'organe de commande (18) de la position fonctionnelle à la position d'actionnement.

2. Equipement selon la revendication 1, **caractérisé en ce que** ledit dispositif actionneur (20) comprend au moins un ressort (20) destiné à maintenir l'organe de commande (18) en temps normal dans ladite position fonctionnelle.

3. Equipement selon la revendication 1 ou 2, **caractérisé en ce que** l'organe de commande (8) comprend en plus un dispositif de bridage (21) pour brider l'organe de commande (18) dans ladite position fonctionnelle.

4. Equipement selon la revendication 3, **caractérisé en ce que** le dispositif de bridage (21) comprend une broche (23) disposée transversalement au dit second axe (17) et couplée d'une manière angulairement fixe au dit arbre (15) de manière à tourner autour du second axe (17), et un dispositif de fin de course (26) opérationnel pour arrêter la broche (23) lorsque l'organe de commande (18) est disposé dans la position fonctionnelle.

5. Equipement selon la revendication 4, **caractérisé en ce que** ledit dispositif actionneur (20) est en plus opérationnel pour déplacer l'organe de commande (18) de ladite position fonctionnelle à une position de repos, l'organe de commande (18) étant positionné, lorsqu'il est dans la position inactive, à une première distance du volant de direction) (5) et, lorsqu'il est dans la position de repos, à une seconde distance du volant de direction (5) supérieure à la première distance.

6. Equipement selon la revendication 5, **caractérisé en ce que** ledit arbre (15) est tubulaire et a une fente (24) façonnée radialement à travers l'arbre (15).

7. Equipement selon la revendication 6, **caractérisé en ce que** le dispositif de bridage (21) est opérationnel pour arrêter l'organe de commande (18) dans ladite position fonctionnelle et dans ladite position de repos et comprend en plus un bouton de dégagement (22) coaxial vis-à-vis du second axe (17) et engagé de manière coulissante et fixe angulairement au travers du dit arbre (15), la broche (23) étant fixée au bouton (22) et engageant la fente de manière coulissante (24) de manière à être déplacée, sous une poussée du bouton (22) en s'écartant et vers une position de dégagement, dans laquelle une broche (23) se désengage du dit dispositif de fin de course (26).

8. Equipement selon la revendication 7, **caractérisé en ce que** le dispositif de bridage (21) comprend en plus au moins un second ressort (25) agissant sur ledit bouton (22) pour déplacer et maintenir la broche (23) dans une position bridée, dans laquelle la broche (23) est opérationnelle pour engager le dit dispositif de fin de course (26).

9. Equipement selon l'une quelconque des revendications précédentes, **caractérisé en ce que** ledit dispositif de commande (8) comprend un autre dispositif de fin de course (29) pour arrêter l'organe de commande (18) dans ladite position d'actionnement.

10. Equipement selon l'une quelconque des revendications précédentes, **caractérisé en ce que** ledit dispositif de commande (8) comprend en plus une unité de commande électronique pouvant commander le fonctionnement de ladite unité d'exécution selon un signal venant du dit commutateur (9).
